# EUROPEAN PATENT SPECIFICATION

(11) **EP 1 814 167 B1**
(45) Date of publication and mention of the grant of the patent: **28.09.2011**
(21) Application number: 07101170.4
(22) Date of filing: 25.01.2007
(51) Int. Cl.: H01L 41/04

(54) **Control apparatus for controlling discharge duration of piezo injector**
Steuervorrichtung zur Steuerung der Entladungsdauer eines Piezo-Injektors
Appareil de commande pour la commande d'une durée de décharge d'un injecteur piézo-électrique

(30) Priority: 31.01.2006 JP 2006021907
(43) Date of publication of application: 01.08.2007
(73) Proprietor: DENSO CORPORATION, Kariya-city, Aichi-pref., 448-8661 (JP)
(72) Inventor: Naruse, Hideo, Kariya-city Aichi 448-8661 (JP)
(74) Representative: TBK

(56) References cited:
- US-A1- 2002 023 622
- US-A1- 2004 237 940

## Description

### BACKGROUND OF THE INVENTION

### 1 Technical Field of the Invention

The present invention relates generally to a control apparatus for a piezo injector which is equipped with a piezoelectric device designed to be charged or discharged by chopper control to operate as an actuator to open or close the injector and may be employed in injecting fuel into a diesel engine for automotive vehicles, and more particularly to such a control apparatus designed to control a discharge duration of the piezoelectric device installed in the piezo injector accurately.

### 2 Background Art

Typical piezo injectors are each equipped with a piezo stack which works as an actuator to expand or contract through the inverse piezoelectric effect. The piezo stack is a capacitive load which expands when being charged or contracts when being discharged.

Piezo injector control apparatuses are typically used to charge or discharge the piezo injector to expand or contract it. Some of the piezo injector control apparatuses are equipped with a chopper for achieving such charging or discharging of the piezo stack to control the stroke of the piezo stack. Specifically, such a type of control apparatus is designed to in a charge mode turn on and off a charge switch of the chopper to increase and decrease the current flwoing through the piezo stack cyclically, thereby charging the piezo stack. The control apparatus also works in a discharge mode to turn on and off a discharge switch of the chopper to increase and decrease the current flowing through the piezo stack cyclically, thereby discharging the piezo stack.

The relation between the voltage, as developed at the piezo stack, and the stroke of the piezo stack depends upon the temperature thereof. Ensuring the accuracy in controlling an open duration for which the piezo injector is opened requires keeping the amount of stroke of the piezo stack constant regardless of the temperature thereof. The control of the amount of stroke of the piezo stack using the voltage, as developed at the piezo stack will, therefore, encounters a difficulty in controlling the open duration of the piezo stack accurately because the amount of stroke of the piezo stack depends upon the temperature thereof.

In order to alleviate the above problem, Japanese Patent First Publication No. 2002-21620 teaches a control system designed to calculate the capacitance of the piezo stack using the amount of charge saved in the piezo stack and the voltage as developed at the end of charging of the piezo stack and determine the temperature of the piezo stack based on the capacitance. Japanese Patent First Publication No. 2005-130561 teaches keeping the rate at which the amount of electrical energy is charged to the piezo stack constant to control the temperature dependence of the stroke of the piezo stack.

The former system is, however, required to perform a complicated operation to calculate the capacitance using the amount of charge saved in the piezo stack and the voltage appearing at the piezo stack at the end of the charge operation. The latter system is useful in charging the piezo stack to expand it, but however, has a difficulty in controlling the discharge duration accurately to release the charge from the piezo stack to contract it.

Further examples may be found in US 2002/23622 and US 2004/237940.

### SUMMARY OF THE INVENTION

It is therefore a principal object of the invention to avoid the disadvantages of the prior art.

It is another object of the invention to provide a piezo injector control apparatus designed to increase and decrease the current cyclically which flows through a piezoelectric device working as an actuator of a piezo injector to discharge the piezoelectric device and control a discharge duration accurately.

According to one aspect of the invention, there is provided a control apparatus for a piezo injector which may be employed in injecting fuel into automotive diesel engines. The control apparatus comprises: (a) a chopper working to operate in a current increasing mode and a current decreasing mode cyclically to control a stroke of a piezoelectric device which serves as an actuator to actuate a piezo injector, the current increasing mode being to increase a current flowing through the piezoelectric device, the current decreasing mode being to decrease the current flowing through the piezoelectric device; and (b) a controller working to operate selectively in a charge mode to charge electrical energy to the piezoelectric device and a discharge mode to discharge the electrical energy from the piezoelectric device. When entering the discharge mode, the controller switches an operation of the chopper from the current increasing mode to the current decreasing mode at a time when the current reaches a given peak value and also switches the operation of the chopper from the current decreasing mode to the current increasing mode when the current reaches a given bottom value, thereby discharging the piezoelectric device. The controller samples a given electrical quantity of state of the piezoelectric device before start of the discharge mode and determines at least one of the peak value and the bottom value based on the electrical quantity of state of the piezoelectric device to discharge the energy from the piezoelectric device within a selected period of time in the discharge mode.

The amount of charge saved in the piezoelectric device usually depends upon the temperature or status of use thereof. When the current flowing through the piezoelectric device reaches the peak value, it is changed to decrease toward the bottom value. When the current reaches the bottom value, it is changed to increase toward the peak value. The amount of charge released from the piezoelectric device is, therefore, approximated by half the product of a difference between the peak value and the bottom value and the discharge duration plus the product of the bottom value and the discharge duration. It is, therefore, possible to release the amount of charge saved in the piezoelectric device within a desired period of time by changing at least one of the peak value and the bottom value. This ensures the accuracy in controlling the discharge duration.

The electrical quantity of state of the piezoelectric device is the amount of charge saved in the piezoelectric device in the charge mode.

The controller is adapted to sample a value of the current flowing through the piezoelectric device during the charge mode and calculate an integrated value of the sampled value. The controller determines the amount of the charge saved in the piezoelectric device based on the integrated value.

The controller may alternatively work to sample the voltage developed at the piezoelectric device before start of the discharge mode as the electrical quantity of state of the piezoelectric device, and sets a difference between the peak value and the bottom value as a function of the sampled voltage to define the peak value and the bottom value used in the discharge mode.

The controller may also work to determine a time interval between an end of the charge mode and a start of the discharge mode and use the determined time interval in determining the amount of the charge saved in the piezoelectric device. For instance, the time interval may be used as a parameter representing the amount of chare leaking from the piezoelectric device between the end of the charge mode and the start of the discharge mode. It is, therefore, possible to determine the amount of charge saved in the piezoelectric device immediately before the start of the discharge mode.

The controller may determine a discharge rate that is a rate at which the energy is discharged from the piezoelectric device based on a given electrical quantity of state of the piezoelectric device during the discharge mode. The controller may correct the at least one of the peak value and the bottom value based on the discharge rate. The discharge rate depends upon the capacitance of the piezoelectric device. The discharge rate in correcting either or both of the peak value and the bottom value may, thus, be used to ensure the accuracy in controlling the discharge duration.
The piezo injector may be constructed to be supplied with fuel from an accumulator in which the fuel is stored at a given pressure. The controller works to modify the charge mode based on a pressure of the fuel in the accumulator.

The controller may increase the amount of the energy charged to the piezoelectric device with an increase in the pressure of the fuel in the accumulator.

In the preferred mode of the invention, the piezo injector may be constructed to be supplied with fuel from an accumulator in which the fuel is stored at a given pressure. The controller works to modify the charge mode based on a pressure of the fuel in the accumulator.

The controller may increase the amount of the energy charged to the piezoelectric device with an increase in the pressure of the fuel in the accumulator.

### BRIEF DESCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is a schematic view which shows a common rail fuel injection system according to the invention which works to control the operation of piezo injectors;
Fig. 2 is a longitudinal sectional view which shows an internal structure of each of the piezo injectors of Fig. 1;
Fig. 3 is a block diagram which shows a circuit structure of a controller installed in the fuel injection system of Fig. 1;
Fig. 4(a) is a view which demonstrates an injection which is to be outputted actuate each of the piezo injectors of Fig. 1;
Fig. 4(b) is a view which demonstrates a charge duration signal which represents a charge duration within which a piezoelectric device is to be charged;
Fig. 4(c) is a view which demonstrates on- and off-signals to turn on or off a charge switch in Fig. 3;
Fig. 4(d) is a view which demonstrates on- and off-signals to turn on or off a cylinder selecting switch in Fig. 3;
Fig. 4(e) is a view which demonstrates on- and off-signals to turn on or off a discharge switch in Fig. 3;
Fig. 4(f) is a view which demonstrates on- and off-signals to turn on or off a bank selecting switch unit in relation to the on-off signals in Fig. 4(d);
Fig. 4(g) is a view which demonstrates on- and off-signals to turn on or off a short switch in Fig. 3;
Fig. 4(h) is a view which demonstrates a change in voltage appearing at a high-potential terminal of the piezoelectric device of Fig. 2;
Fig. 4(i) is a view which demonstrates a change in current flowing through the piezoelectric device of Fig. 2;
Fig. 5(a) is a circuit diagram which shows a closed loop formed when a charge switch is turned on which works as a chopper in a charge mode to increase the current flowing through the piezoelectric device of Fig. 2;
Fig. 5(b) is a circuit diagram which shows a closed loop formed when a charge switch is turned off which works as a chopper in a charge mode to decrease the current flowing through the piezoelectric device of Fig. 2;
Fig. 6(a) is a circuit diagram which shows a closed loop formed when a discharge switch is turned on which works as a chopper in a discharge mode to increase the current flowing through the piezoelectric device of Fig. 2;
Fig. 6(b) is a circuit diagram which shows a closed loop formed when a discharge switch is turned off which works as a chopper in a discharge mode to decrease the current flowing through the piezoelectric device of Fig. 2;
Fig. 7 is a graph which shows a relation between the capacitance of a piezoelectric device and the temperature thereof;
Fig. 8 is a graph which shows a relation between the piezoelectric modulus d defined by a ratio of the amount of stroke of a piezoelectric devices to the voltage applied to the piezoelectric devices and the temperature of the piezoelectric device;
Fig. 9 is a view which shows a charge mode to charge the piezoelectric device of Fig. 2;
Fig. 10 is a graph which shows a relation between a target amount of energy to be charged to the piezoelectric device of Fig. 2 and the pressure of fuel in a common rail of Fig. 1;
Fig. 11 is a view which shows a discharge mode to discharge the piezoelectric device of Fig. 2;
Fig. 12(a) is a graph which demonstrates relations of the voltage developed at a piezoelectric device to a charge duration and a discharge duration when a greater energy and a smaller energy are to be charged to the piezoelectric device;
Fig. 12(b) is a graph which demonstrates relations of the voltage developed at a piezoelectric device to a charge duration and a discharge duration when the temperature of the piezoelectric device is high and low;
Fig. 13 is a graph which represents levels of a peak value required to keep a discharge duration constant when the voltage, as developed at a piezoelectric device, the amount of energy charged to the piezoelectric device, or the capacitance C of the piezoelectric device is changed;
Fig. 14(a) is a time chart which shows the waveform of current flowing through a piezoelectric device and how to select the level of a peak value;
Fig. 14(b) is a time chart which shows an integrated value of the voltage at a piezoelectric device in relation to Fig. 14(a);
Fig. 15 is a block diagram which shows a circuit structure of a controller according to the second embodiment of the invention;
Fig. 16 is a block diagram which shows functional blocks in the controller of Fig. 15;
Fig. 17 is a graph which shows a variation in voltage developed at a piezoelectric device with respect to time;
Fig. 18 is a block diagram which shows a circuit structure of a controller according to the third embodiment of the invention;
Fig. 19 is a block diagram which shows functional blocks in the controller of Fig. 18;
Fig. 20 is a graph which shows a change in voltage as developed at a piezoelectric device and a change in smoothed level of such a voltage;
Fig. 21(a) is a graph which demonstrates a change in voltage as developed at a piezoelectric device;
Fig. 21(b) is a graph which demonstrates a change in current flowing through a piezoelectric device;
Fig. 22(a) is a view which show a modified manner to change a bottom value of current flowing through a piezoelectric device to control a discharge duration;
Fig. 22(b) is a view which shows another modified manner to change a peak value of current flowing through a piezoelectric device stepwise to control a discharge duration;
Fig. 23 is a graph which shows a modified manner to define a discharge rate of a piezoelectric device; and
Fig. 24 is a graph which shows another modified manner to define a discharge rate of a piezoelectric device.

### DESCRIPTION OF THE PREFERRED EMBODIMENTS

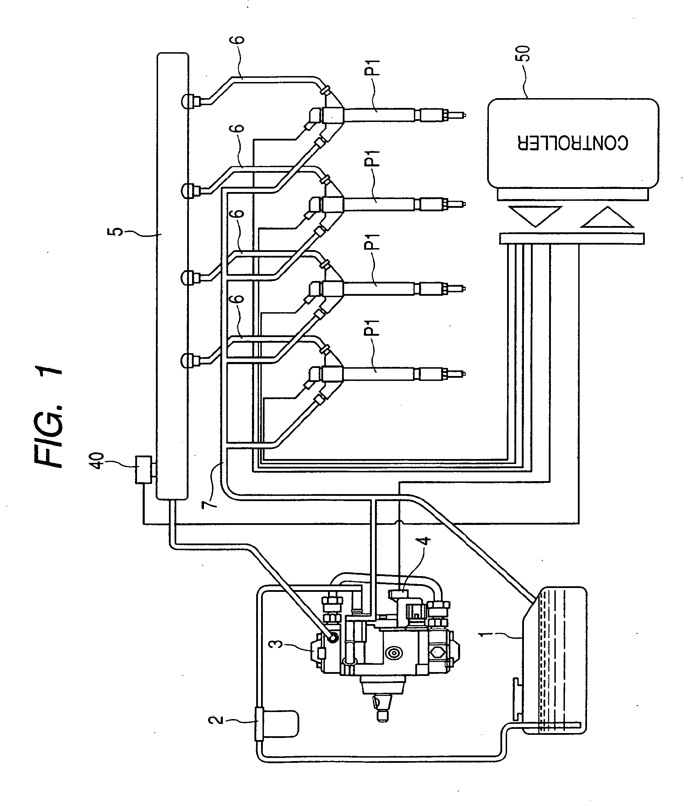

Referring to the drawings, wherein like reference numbers refer to like parts in several views, particularly to Fig. 1, there is shown a common rail fuel injection system for diesel engines which is equipped with a controller working to control operations of piezo injectors *PI* according to the first embodiment of the invention.

The common rail fuel injection system includes generally a fuel pump 3, a common rail 5, and a controller 50. The fuel pump 3 works to pump fuel out of a fuel tank 1 through a fuel filter 2. The fuel pump 3 is equipped with a suction control valve (SCV) 4 functioning to control the amount of fuel to be discharged out of the fuel pump 3.

The fuel fed from the fuel pump 3 is stored in the common rail 5 under a controlled high-pressure and supplied to the piezo injectors *PI* through high-pressure fuel paths 6, respectively. The diesel engine (not shown) has, for example, four cylinders each of which has one of the piezo injectors *PI* installed therein. The piezo injectors *PI* each lead to a low-pressure fuel path 7 connecting with the fuel tank 1 to return the fuel back to the fuel tank 1.

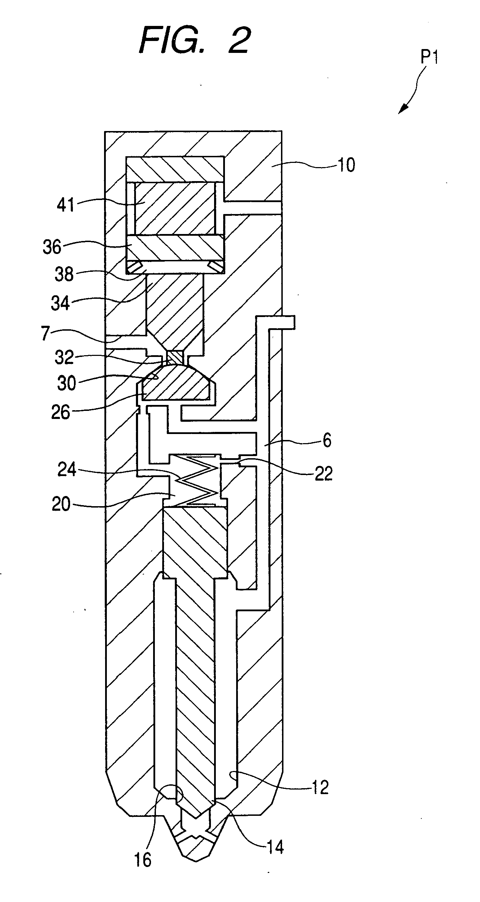

Fig. 2 shows an internal structure of each of the piezo injectors *PI.*

The piezo injector *PI* has a body 10 in which a cylindrical needle chamber 12 is formed. A nozzle needle 14 is disposed within the needle chamber 12 to be movable in a lengthwise direction (i.e., an axial direction of the injector body 10). When the nozzle needle 14 is placed on an annular needle seat 16 formed on an inner wall of the head of the body 10, it blocks fluid communication between the needle chamber 12 and the outside (i.e., a combustion chamber of the diesel engine). Alternatively, when the nozzle needle 14 is lifted away from the needle seat 16, the fluid communication is established between the needle chamber 12 and the outside. The needle chamber 12 communicates with the high-pressure fuel path 6 leading to the common rail 5 and is supplied with the high-pressure fuel.

The body 10 also includes a back pressure chamber 20, a nozzle spring 24, a ball 26, a small-diameter piston 34, a large-diameter piston 36, and a piezoelectric device 41.

The back pressure chamber 20 is exposed to the back surface of the nozzle needle 14. The fuel fed from the high-pressure fuel path 6 enters the back pressure chamber 20 through an orifice 22. The nozzle spring 24 is disposed within the back pressure chamber 20 to urge the nozzle needle 14 into constant abutment with the needle seat 16.

The back pressure chamber 20 communicates with the low-pressure fuel path 7 through the ball 26. The ball 26 has the back surface which is to be placed on an annular valve seat 30 to block the fluid communication between the low-pressure path 7 and the back pressure chamber 20. When the ball 26 is lifted away from the valve seat 30, it establishes the fluid communication between the low-pressure fuel path 7 and the back pressure chamber 20.

The ball 26 is joined to the small-diameter piston 34 through a pressure pin 32. The small-diameter piston 34 has a back face exposed to a front face of the large-diameter piston 34 greater in diameter than the small-diameter piston 34. The small-diameter piston 34, the large-diameter piston 36, and the inner wall of the body 10 define a stroke amplifying chamber 38 which is filled with fluid such as the fuel.

The large-diameter piston 36 is joined at the back face thereof to the piezoelectric device 41 which is secured at the back face thereof to the inner wall of the body 10.

The piezoelectric device 41 includes a piezo stack made up of a plurality of piezoelectric elements which works to expand or contract with the aid of the inverse piezoelectric effect. Specifically, the piezoelectric device 41 is a capacitive load which works to expand when electrically charged and contract when discharged. The piezoelectric elements are made of piezoelectric material such as lead zirconate titaniate (PZT).

When no current is applied to the piezoelectric device 41, so that it contracts, the pressure of fuel within the high-pressure fuel path 6 acts on the ball 26, so that the ball 26 and the small-diameter piston 34 are placed in the rearmost position within the body 10. This blocks the fluid communication between the back pressure chamber 20 and the low-pressure fuel path 7, so that the sum of the pressure of fuel within the back pressure chamber 20 (i.e., the pressure of fuel within the common rail 5) and the elastic pressure of the needle spring 24 acts on the nozzle needle 14 and urges it into abutment with the needle seat 16 to close spray holes formed in the head of the body 10.

Alternatively, when the current is applied to the piezoelectric device 41, so that it expands, it will cause the ball 26 to be moved downward, as viewed in Fig. 2, to establish the fluid communication between the back pressure chamber 20 and the low-pressure fuel path 7, thus resulting in a drop in pressure of the fuel in the back pressure chamber 20. When the pressure of the fuel in the needle chamber 12 urging the nozzle needle 14 in the valve-opening direction (i.e., the upward direction, as viewed in Fig. 2) exceeds the sum of the pressure of fuel within the back pressure chamber 20 and the elastic pressure of the needle spring 24, it will cause the nozzle needle 14 to be lifted away from the needle seat 16 to open the spray holes.

Referring back to Fig. 1, the common rail fuel injection system also includes a fuel pressure sensor 40 which works to measure the pressure of fuel within the common rail 5 and output a signal indicative thereof to the controller 50. The controller 50 also monitors outputs of other sensors which measure parameters representing operating conditions of the diesel engine.

The controller 50 analyzes the outputs from the above sensors to provide control signals to the piezo injectors PI and other actuators to control the output of the diesel engine.

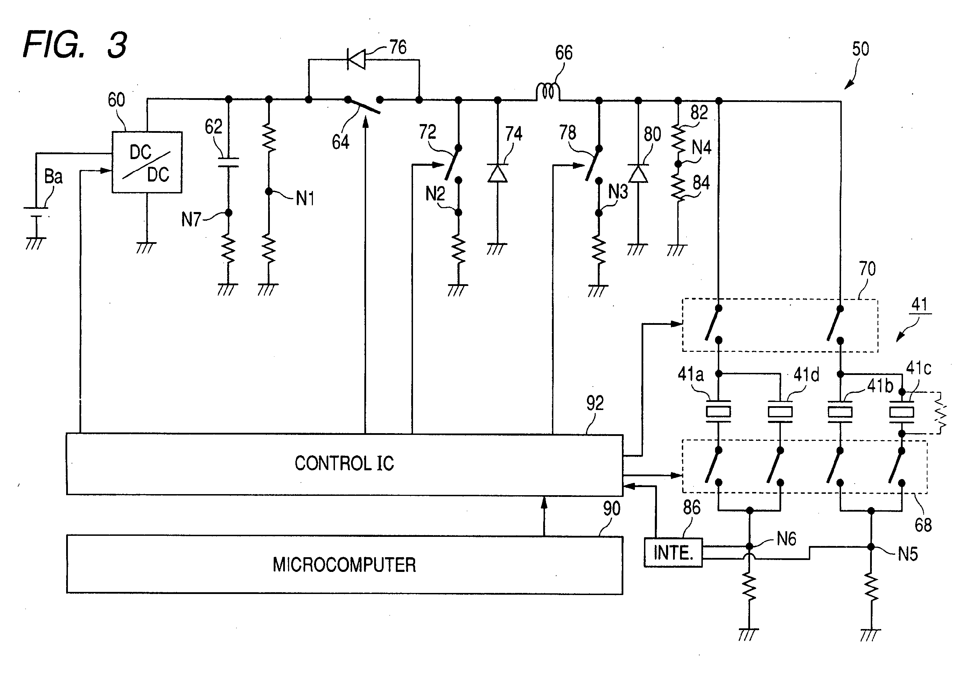

Fig. 3 illustrates internal structures of the controller 50 and the piezoelectric device 41 of each of the piezo injectors *PI.* The controller 50 has an injector driver circuit, as described below, for charging or discharging the piezoelectric device 41.

The electric power is supplied from a storage battery *Ba* to a DC/DC converter 60. The DC/DC converter 60 works as a step-up transformer to step-up the voltage (e.g., 12V) inputted from the battery *Ba* to a high-voltage (e.g., 200V to 300V) required to charge the piezoelectric devices 41.

The high-voltage stepped up by the DC/DC converter 60 is applied to a capacitor 62. The capacitor 62 is joined at an end thereof to the DC/DC converter 60 and at the other end to ground. The application of the high-voltage, as stepped up by the DC/DC converter 60, to the capacitor 62 will cause the capacitor 62 to store charges for actuating the piezoelectric devices 41. The capacitor 62 is preferably designed to have a capacitance of, for example, several hundreds µF, which hardly results in a change in voltage thereof in a single charging operation.

The high-potential side or a terminal of the capacitor 62 leading to the DC/DC converter 60 is connected to a high-potential terminal of each of the piezoelectric devices 41 through a charge switch 64 and a charge/discharge coil 66 which are joined in series. The piezoelectric devices 41 are connected at low-potential terminals thereof to ground. In the following discussion, the piezoelectric devices 41 of the piezo injectors *PI* installed in a first, a second, a third, and a fourth cylinder of the engine will also be referred to as piezoelectric devices 41a, 41 b, 41c, and 41d, respectively.

Specifically, a cylinder selecting switch 68 is, as clearly illustrated, disposed between the low-potential terminals of the piezoelectric devices 41a to 41d and ground and works to charge or discharge the piezoelectric devices 41a to 41d selectively. Disposed between a parallel circuit made up of the piezoelectric devices 41a and 41d and the charge/ discharge coil 66 and between a parallel circuit made up of the piezoelectric devices 41b and 41c and the charge/discharge coil 66 is a bank selecting switch unit 70 which works to inject the fuel into two or more of the cylinders simultaneously or establish an emergency running mode to permit the vehicle to travel to safe areas (e.g., automobile workshops).

A discharging switch 72 is connected at a terminal thereof to between the charge switch 64 and the charge/discharge coil 66 and at the other terminal to ground.

The discharging switch 72 is also connected to a diode 74. The diode 74 is connected at a cathode thereof to between the capacitor 62 and the charge/discharge coil 66 and at an anode thereof to ground. The diode 74 servers as a chopper, as will also be referred to as a charging chopper circuit below, together with the capacitor 62, the charge switch 64, and the charge/discharge coil 66 to charge the piezoelectric devices 41 and functions as a freewheeling diode.

A diode 76 is joined across the charge switch 64. Specifically, the diode 76 is joined at a cathode thereof to the capacitor 62 and at an anode thereof to the discharging switch 72. The diode 76 servers as a chopper, as will be also referred to as a discharging chopper circuit below, together with the capacitor 62, the charge/discharge coil 66, and the discharging switch 72 to discharge the piezoelectric devices 41 and functions as a freewheeling diode.

Between the charge/discharge coil 66 and the bank selecting switch unit 70, a short switch 78, a diode 80, and a series-connected combination of a resistor 82 and a resistor 84 are disposed in parallel to the piezoelectric devices 41. The short switch 78 works to release a portion of electric energy from the piezoelectric devices 41 completely which has been still left therein without being discharged by activities of the discharging copper circuit. The diode 80 works to keep the voltage in the piezoelectric devices 41 positive.

The controller 50 is also equipped with a microcomputer 90 and a control IC 92. The microcomputer 90 works to monitor the outputs from the above described sensors representing operating conditions of the diesel engine to determine parameters, as will be described below in detail, for controlling the amount of stroke of the piezoelectric devices 41 and output them to the control IC 92. The control IC 92 analyzes the parameters inputted from the microcomputer 90 and actuates the injector drive circuit, as described above. The control IC 92 and the microcomputer 90 sample potentials appearing at nodes *N1* to *N7* of the injector driver circuit to know the current flowing through and voltage appearing at the piezoelectric devices 41.

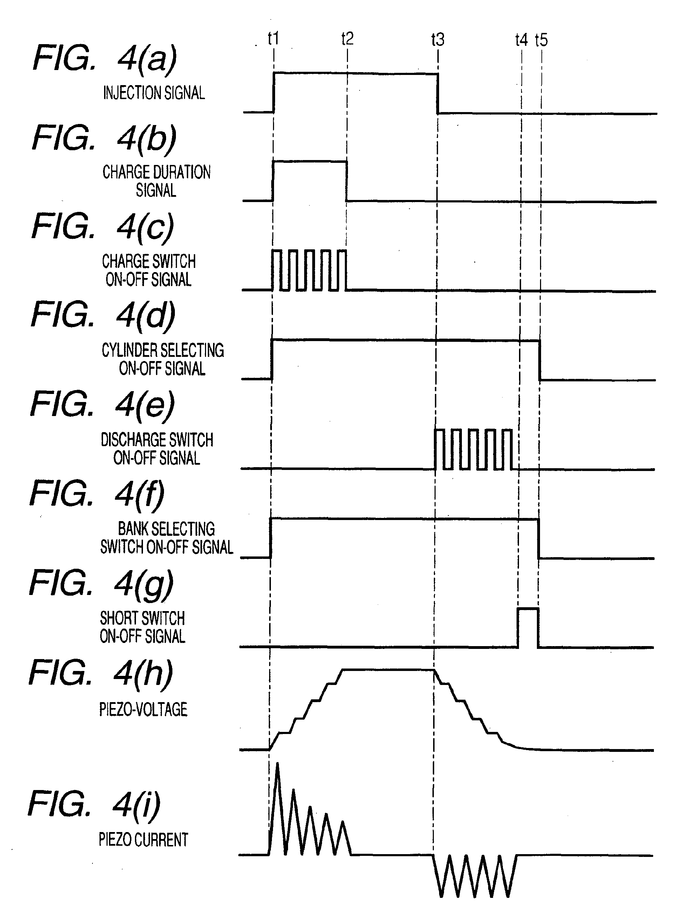

The control of the amount of stroke (i.e., charging or discharging) of each of the piezoelectric devices 41 will be described below with reference to Figs. 4(a) to 4(i).

Fig. 4(a) demonstrates an injection signal which is to be outputted from the microcomputer 90 to the control IC 92 to actuate each of the piezo injectors *PI* for a selected injection duration. Fig. 4(b) demonstrates a charge duration signal which is to be outputted from the microcomputer 90 to the control IC 92 and represents a charge duration within which the piezoelectric device 41 is to be charged. Fig. 4(c) demonstrates on- and off-signals to turn on or off the charge switch 64. Fig. 4(d) demonstrates on- and off-signals to turn on or off the cylinder selecting switch 68 for establishing or blocking the connection between a selected one of the piezoelectric devices 41 (the piezoelectric device 41a in the illustrated example) and ground. Fig. 4(e) demonstrates on- and off-signals to turn on or off the discharge switch 72. Fig. 4(f) demonstrates on- and off-signals to turn on or off the bank selecting switch unit 70 in relation to the on-off signals in Fig. 4(d). Fig. 4(g) demonstrates on- and off-signals to turn on or off the short switch 78. Fig. 4(h) demonstrates a change in voltage appearing at the high-potential terminal of the piezoelectric device 41. Fig. 4(i) demonstrates a change in current flowing through the piezoelectric device 41, that is, a change in electrical energy charged into or discharged from the piezoelectric device 41.

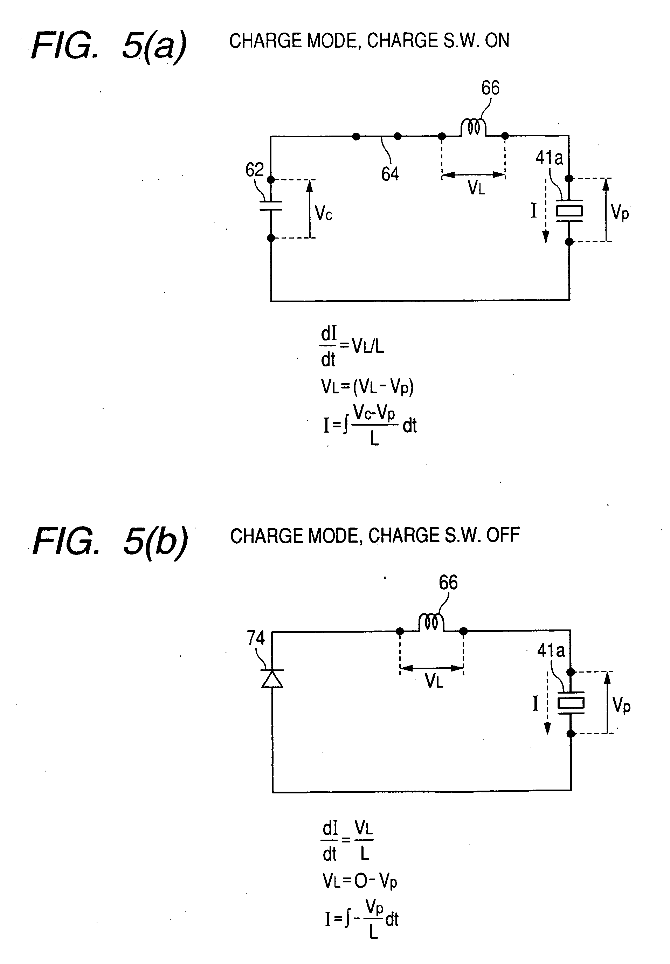

At time *t1,* the microcomputer 90 outputs the injection signal and the charge duration signal to the control IC 92. The control IC 92 turns on and off the charge switch 64 cyclically to interrupt the current flowing therethrough at regular intervals (i.e., a chopper operation). Specifically, when the charge switch 64 is turned on, it forms, as illustrated in Fig. 5(a), a closed loop made up of the capacitor 62, the charge switch 64, the charge/discharge coil 66, and a selected one of the piezoelectric devices 41 (the piezoelectric device 41a in this example). This causes the electrical energy stored in the capacitor 62 to be charged to the piezoelectric device 41a, so that the amount of current flowing through the piezoelectric device 41a, as illustrated in Fig. 4(i), increases at a constant rate. Subsequently, when the charge switch 64 is turned off, it forms, as illustrated in Fig. 5(b), a closed loop made up of the charge/discharge coil 66, a selected one of the piezoelectric devices 41 (the piezoelectric device 41a in this example), and the diode 74. This causes the flywheel energy stored in the charge/discharge coil 66 to be charged to the piezoelectric device 41 a, so that the amount of current flowing through the piezoelectric device 41a, as illustrated in Fig. 4(i), decreases at a constant rate. When the current reaches zero (0), the control IC 92 turns on the charge switch 64 again.

Specifically, the control IC 92 performs step-up chopper control to turn on and off the charge switch 64 cyclically between times *t1* and *t2*, thereby charging the piezoelectric device 41a, so that the potential appearing at the high-potential terminal of the piezoelectric device 41a rises.

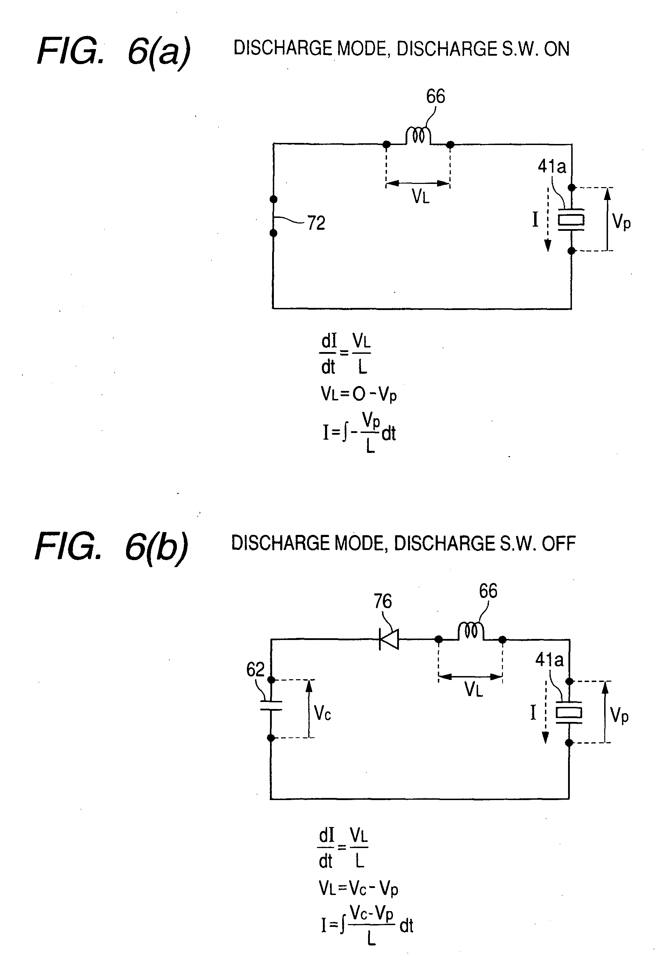

When the injection signal is reversed in level at time *t3*, the control IC 92 starts to turn on and off the discharge switch 72 cyclically. Specifically, when the discharge switch 72 is turned on, it forms, as illustrated in Fig. 6(a), a closed loop made up of the discharge switch 72, the charge/discharge coil 66, and a selected one of the piezoelectric devices 41 (the piezoelectric device 41a in this example). This causes the electrical energy to be discharged from the piezoelectric device 41a, so that the amount of current flowing through the piezoelectric device 41a, as illustrated in Fig. 4(i), increases at a constant rate. Subsequently, when the discharge switch 72 is turned off, it forms, as illustrated in Fig. 6(b), a closed loop made up of the capacitor 62, the diode 76, the charge/discharge coil 66, and a selected one of the piezoelectric devices 41 (the piezoelectric device 41a in this example). This causes the flywheel energy stored in the charge/discharge coil 66 to be withdrawn to the capacitor 62, so that the amount of current flowing through the piezoelectric device 41a, as illustrated in Fig. 4(i), decreases at a constant rate. When the current reaches zero (0), the control IC 92 turns on the discharge switch 72 again.

Specifically, the control IC 92 performs step-down chopper control to turn on and off the discharge switch 72 cyclically after time *t3*, thereby discharging the piezoelectric device 41a, so that the potential appearing at the high-potential terminal of the piezoelectric device 41a drops. Equations, as shown in Figs. 5(a) to 6(b), represent relations among the current *I* flowing through the piezoelectric device 41a, the inductance *L* of the charge/discharge coil 66, the voltage Vp at the piezoelectric device 41a, and the voltage Vc at the capacitor 62.

Referring back to Figs. 4(a) to 4(i), after completion of discharging of the piezoelectric device 41a under the step-down chopper control, the control IC 92 turns on the short switch 78 between times *t4* and *t5* to release the electrical energy from the piezoelectric device 41a fully.

As apparent from Figs. 4(a) to 4(i), the charging of the piezoelectric device 41a is achieved by turning on and off the charge switch 64 cyclically for a period of time, as defined by the charge duration signal outputted by the microcomputer 90. Specifically, the expansion of each of the piezoelectric devices 41 is achieved by open-loop control. A desired amount of stroke of each of the piezoelectric devices 41 is achieved by controlling the quantity of electrical state of the piezoelectric device 41, as will be described below, having a correlation to the amount of stroke thereof.

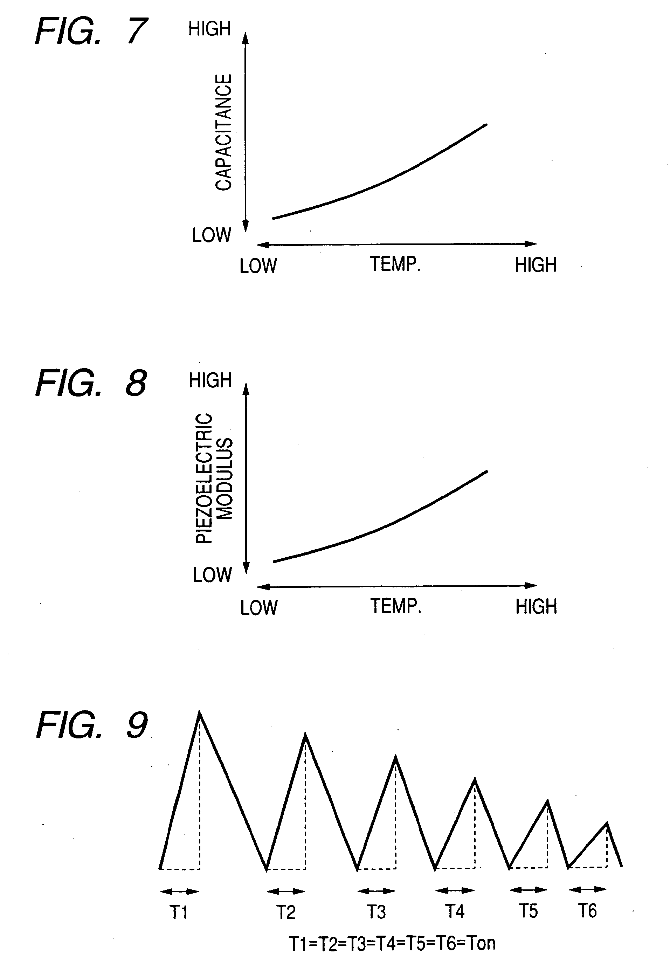

The capacitance C of each of the piezoelectric devices 41 (i.e., an apparent capacitance making the connection between the electric charge stored in the piezoelectric device 41 and the voltage developed at the piezoelectric device 41) has a temperature dependency. Specifically, the capacitance C increases, as demonstrated in Fig. 7, with an increase in temperature of the piezoelectric device 41. It is, thus, impossible to use the quantity of temperature-dependent electrical state of the piezoelectric devices 41 to control the amount of stroke thereof. For another example, the piezoelectric modulus d defined by a ratio of the amount of stroke of the piezoelectric devices 41 to the voltage applied to the piezoelectric devices 41, as illustrated in Fig. 8, increases with an increase in temperature of the piezoelectric devices 41. Use of the voltage applied to the piezoelectric devices 41 to control the amount of stroke thereof, thus, encounters a difficulty in keeping the control accuracy high.

In light of the above problems, the microcomputer 90 is designed to determine the amount of electrical energy to be supplied to the piezoelectric devices 41 when it is required to charge the piezoelectric devices 41 to expand them. This is because the amount of stroke of the piezoelectric devices 41 is a function of the amount of energy applied thereto regardless of the temperature thereof. This will be discussed simply below.

When the energy E in the piezoelectric device 41 is constant, an increase in the capacitance *C,* as illustrated in Fig. 7, arising from an increase in the temperature of the piezoelectric device 41 will result in a drop in voltage *V*, as developed at the piezoelectric device 41, according to a relation of *E=* 1/2 *CV².* The increase in the piezoelectric modulus *d* will, thus, be cancelled by the drop in voltage of the piezoelectric device 41. The details of the reason why when the energy stored therein is constant, it will cause a constant amount of stroke of the piezoelectric device 41 is established is described, for example, in Japanese Patent First Publication No. 2005-130561, as referred to in the introductory part of this application.

In order to keep the amount of energy to be applied to the piezoelectric devices 41 constant, the microcomputer 90 is designed to actuate the charge switch 64 in a chopper mode, as illustrated in Fig. 9. Specifically, the microcomputer 90 works to keep an on-duration of the charge switch 64 constant during charging of the piezoelectric device 41 and determine an off-duration of the charge switch 64 so as to terminate when the current flowing through the piezoelectric device 41 reaches zero (0). In other words, the microcomputer 90 sets the instant at which the current flowing through the piezoelectric device 41 is changed from increasing to decreasing to the time when a predetermined period of time has passed after the current starts to increase gradually and also sets the instant at which the current flowing through the piezoelectric device 41 is changed from decreasing to increasing to the time when the current reaches zero (0). This causes the amount of energy supplied to the piezoelectric device 41 per unit time to be kept substantially constant regardless of the temperature of the piezoelectric device 41. The amount of energy supplied to the piezoelectric device 41 may, therefore, be controlled accurately by selecting the duration in which the piezoelectric device 41 is to be charged. The manner in which the amount of energy to be supplied to the piezoelectric device 41 per unit time is kept constant under the above described chopper control is taught in, for example, Japanese Patent First Publication No. 2002-13156.

The microcomputer 90 of the controller 50 is designed to determine the amount of energy to be charged to the piezoelectric devices 41 as a function of the pressure of fuel within the common rail 5 to control the amount of expansion of the piezoelectric devices 41. The reason why the amount of energy to be charged to the piezoelectric devices 41 is determined depending upon the pressure of fuel within the common rail 5 is because the amount of stroke of the piezoelectric devices 41 will be changed by physical pressure acting thereon from the direction opposite the direction of the stoke. Lifting the nozzle needle 14 upward, as viewed in Fig. 2, to open the spray holes of the piezo injectors *PI* requires energization of the piezoelectric device 41 to produce the pressure acting on the ball 26 which overcomes the pressure of fuel supplied from the high-pressure fuel path 6 urging the ball 26 into abutment with the valve seat 30.

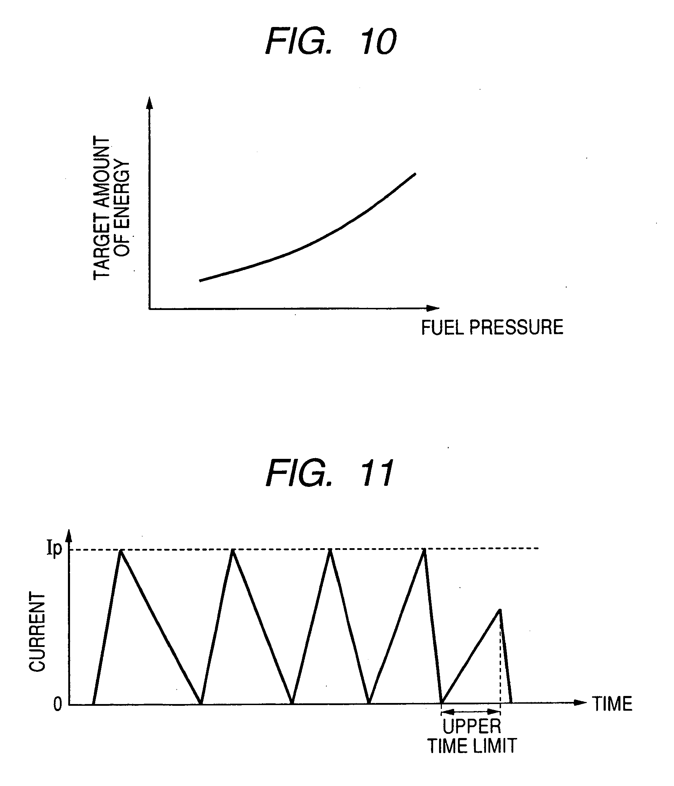

Specifically, the microcomputer 90 stores therein a map, as illustrated in Fig. 10, and selects a target amount of energy to be charged to the piezoelectric devices 41 by look-up using the map based on the pressure of fuel within the common rail 5, as measured by the fuel pressure sensor 40. In the map of Fig. 10, the target amount of energy to be charged to the piezoelectric devices 41 is increased with an increase in pressure of fuel within the common rail 5. The microcomputer 90 outputs the charge duration signal, as demonstrated in Fig. 4(b), to the control IC 92 as a function of the target amount of energy to be charged to the piezoelectric devices 41.

The microcomputer 90 also works to discharge the piezoelectric devices 41 in a chopper mode, as illustrated in Fig. 11. Specifically, the microcomputer 90 turns off the discharging switch 72 at the time when the current flowing through the piezoelectric devices 41 has reached a given peak value *Ip* and then turns on the discharge switch 72 at the time when such a current has reached zero (0). In other words, the microcomputer 90 changes the current flowing through the piezoelectric devices 41 from increasing to decreasing when it has reached the peak value *Ip* and also from decreasing to increasing when it has reached zero (0). However, an upper limit is given to the duration in which the current is increased gradually. When such a duration has reached the upper limit before the current flowing through the piezoelectric devices 41 reaches the peak value *Ip,* the microcomputer 90 changes the current to decrease. This is because the rate at which the current increases during turning on of the discharging switch 72 will decrease with the time from when the piezoelectric devices 41 start to be discharged.

Specifically, the above chopper mode serves to increase the amount of energy discharged from the piezoelectric devices 41 in proportion to the discharge duration of the piezoelectric devices 41. The amount of charge released from the piezoelectric devices 41 during the discharge duration t may be approximated by *t* × *Ip* /2 since the area of the triangle, as illustrated in Fig. 11, is half the base times the height.

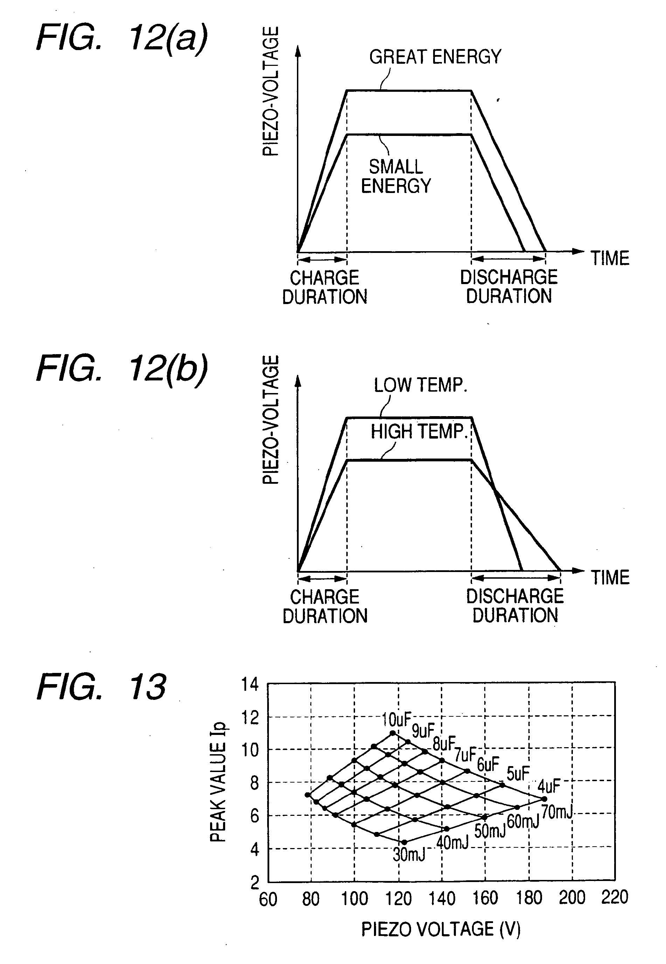

Usually, during the charging of the piezoelectric devices 41 in the above manner, the amount of charge stored in the piezoelectric devices 41 and voltage, as developed at the piezoelectric devices 41 may vary, as described above, thus resulting in a change in duration required to discharge the piezoelectric devices 41. Fig. 12(a) is a graph which demonstrates for the case where the greater energy is charged to the piezoelectric devices 41 is changed in the condition where the temperature of the piezoelectric devices 41 is constant. In this example, the amount of charge stored in the piezoelectric devices 41 when the greater energy is charged thereto is greater than that when the smaller energy is charged thereto, thus resulting in an increased period of time required to discharge the piezoelectric devices 41 fully. Fig. 12(b) demonstrates for the case where the amount of energy charged to the piezoelectric devices 41 is constant for different values of the temperature of the piezoelectric devices 41. In this example, the discharge duration required to discharge the piezoelectric devices 41 fully when the temperature of the piezoelectric devices 41 is high will be longer than that when the temperature is low. This is because an increase in temperature of the piezoelectric devices 41 will result in an increase in the capacitance *C*, so that the voltage developed at the piezoelectric devices 41 will drop, and the amount of charge to be stored therein will increase as long as the energy charged to the piezoelectric devices 41 is constant.

Fig. 13 is a graph which represents levels of the peak value *Ip* required to keep the discharge duration constant when the voltage, as developed at the piezoelectric devices 41, the amount of energy charged to the piezoelectric devices 41, or the capacitance *C* of the piezoelectric devices 41 is changed. The graph shows that the peak value *Ip* increases with an increase in the amount of energy supplied to the piezoelectric devices 41 and decreases in reverse proportion to the capacitance *C*. The desired discharge duration may, therefore, be established by selecting the level of the peak value *Ip* as a function of the amount of energy charged to the piezoelectric devices 41 or the capacitance *C* thereof, but however, it is quite complicated. The microcomputer 90 is, therefore, designed to determine the level of the peak value *Ip* as a function of the amount of electrical charge saved in each of the piezoelectric devices 41. Specifically, the microcomputer 90 works to increase the level of the peak value *Ip* with an increase in amount of charge stored in the piezoelectric device 41 during the charge operation thereof so as to bring the value, as derived by integrating the current in the form of a triangular wave, as illustrated in Fig. 11, over a desired time, into agreement with the amount of charge saved in the piezoelectric device 41. This establishes a desired value of the discharge duration regardless of the amount of charge saved in the piezoelectric device 41.

The microcomputer 90 works to integrate through an integrator 86 the current flowing through the nodes *N5* and *N6,* as illustrated in Fig. 3, between the cylinder selecting switch 68 and ground to monitor the amount of charge saved in each of the piezoelectric devices 41.

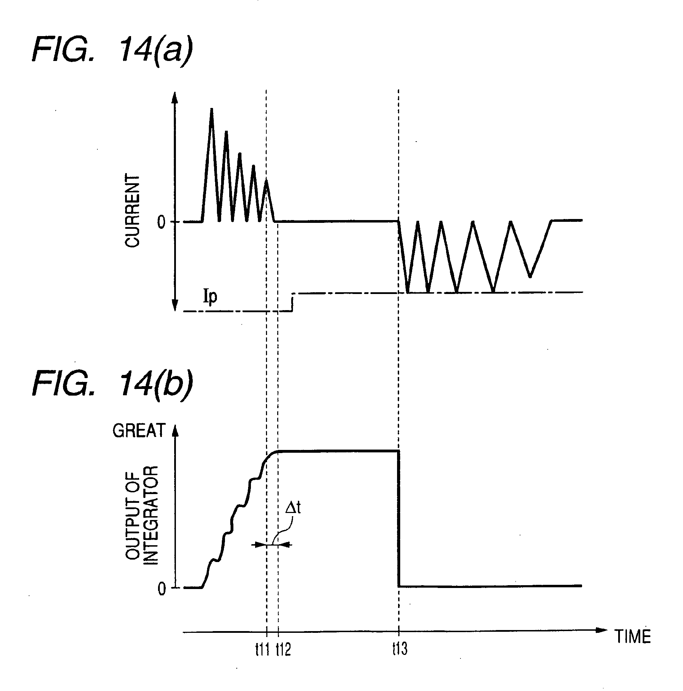

Figs. 14(a) and 14(b) demonstrate how to determine the level of the peak value *Ip* using the integrator 86 in the control IC 92. Fig. 14(a) illustrates the current flowing through the piezoelectric device 41. Fig. 14(b) illustrates an output of the integrator 86, as sampled by the control IC 92. The control IC 92 holds the output of the integrator 86 at time *t12* after the elapse of a given time interval Δ*t* from time *t11* corresponding to time *t2,* as illustrated in Fig. 4(c), at which the turning on/off operation of the charge switch 64 is completed. The time interval Δ*t* is the time length expected to be consumed until the output of the integrator 86 is stable. The control IC 92 determines the peak value *Ip* based on the held value of the output of the integrator 86 and initializes the held value at time *t13* corresponding to time *t3,* as illustrated in Fig. 4(e), at which the on/off operation of the discharging switch 72 starts.

As apparent from the above discussion, the common rail fuel injection system is designed to, in the discharge mode of the piezoelectric devices 41, switch, as can be seen from Fig. 14(a), the current-increasing mode to the current-increasing mode at the instant when the current flowing through the piezoelectric devices 41 reaches the peak value *Ip* to control the discharging of the energy stored in the piezoelectric devices 41. The system also works to determine the peak value *Ip* variably as a function of the amount of charge saved in each of the piezoelectric devices 41, thereby enabling the charge to be released from the piezoelectric devices 41 within a desired period of time.

The system is equipped with the integrator 86 which works to integrate the current flowing through the piezoelectric devices 41 with respect to time to calculate the amount of charge stored in each of the piezoelectric devices 41 during the charge operation, thus ensuring increased accuracy in determining the saved amount of charge.

The system works to determine the amount of energy to be charged to the piezoelectric devices 41 variably as a function of the pressure of fuel within the common rail 5. This causes the temperature of the piezoelectric device 41 and the pressure of fuel in the common rail 5 to be factors resulting in a change in the amount of charge stored in the piezoelectric device 41. The advantages, as described above, that the peak value *Ip* is determined as a function of the amount of charge saved in the piezoelectric device 41 to control the discharge duration of the piezoelectric devices 41 will, thus, be beneficial to the common rail injection system.

The controller 50 may be designed to determine either or both of the peak value *Ip* and a bottom value (e.g., zero) of the current flowing through each of the piezoelectric devices 41 during the discharge mode based on the amount of charge saved in the piezoelectric device 41 in the charge mode.

The controller 50 may alternatively be designed to determine either or both of the peak value *Ip* and the bottom value of the current flowing through the piezoelectric device 41 which are used in the discharge mode based on a parameter other than the amount of charge saved in the piezoelectric device 41. For example, the controller 50 may work to monitor the voltage, as developed after the charge operation and before the discharge operation, and determine a difference between the peak value *Ip* and the bottom value as a function of the monitored voltage.

Usually, the discharge rate that is the rate at which each of the piezoelectric devices 41 is discharged during the discharge mode, as discussed above, depends upon the capacitance C. The value of the capacitance C is, as already described, varied due to, for example, the temperature of the piezoelectric device 41 or has an individual difference among the piezo injectors *PI* (i.e., the piezoelectric devices 41). The controller 50 may preferably be designed to monitor the discharge rate and correct at least one of the peak value *Ip* and the bottom value of the current flowing through the piezoelectric device 41 as a function of the discharge rate. The discharge rate is preferably determined, as will be described later in detail, using the voltage, as developed at the piezoelectric device 41 during the discharge mode, which is smoothed using, for example, a filter.

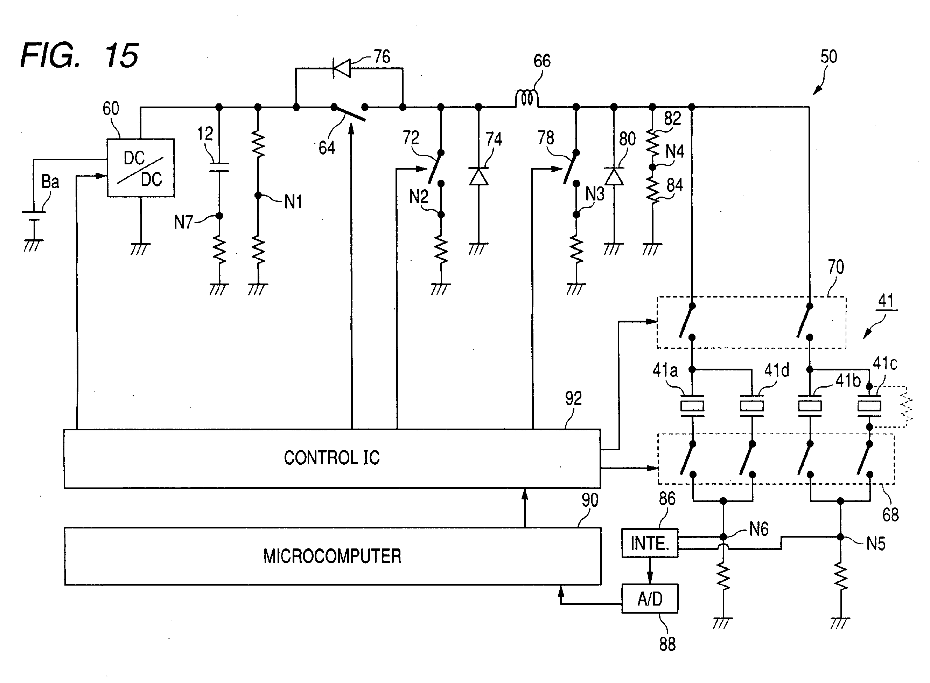

Fig. 15 shows the controller 50 according to the second embodiment of the invention.

The controller 50 is designed to sample the amount of charge leaking from the piezoelectric devices 41 between the completion of the charge operation and the start of the discharge operation to calculate the amount of charge retained in the piezoelectric devices 41 immediately before the start of the discharge operation and set the peak value *Ip* as a function of the calculated amount of charge. Such a leakage includes the charge flowing from the piezoelectric devices 41 to ground through the resistors 82 and 84 connected in series. The resistors 82 and 84 have greater resistance values and are used to sample the voltage appearing at the node *N4* to monitor the voltage developed at the piezoelectric devices 41, but they will be one of factors contributing to the leakage of the charge from the piezoelectric devices 41. Typically, resistors are connected across the piezoelectric devices 41, respectively (only one is shown by a broken line in Fig. 15 for the brevity of illustration), to protect the piezoelectric devices 41 electrically. Such resistors usually have a greater resistance value and will also be one of the factors contributing to the leakage of the charge from the piezoelectric devices 41 between the completion of the charge operation and the start of the discharge operation. A several-percentage difference in amount of charge stored in each of the piezoelectric devices 41 will, thus, arise between the end of the charge operation and the discharge operation. In light of this problem, the controller 50 of this embodiment is designed to monitor the amount of charge stored in each of the piezoelectric devices 41 just before it starts to be discharged for controlling the discharge duration.

The controller 50, as illustrated in Fig. 15, includes an A/D converter 88 working to convert the output of the integrator 86 into the digital form. The microcomputer 90 samples the output of the integrator 86 through the A/D converter 88.

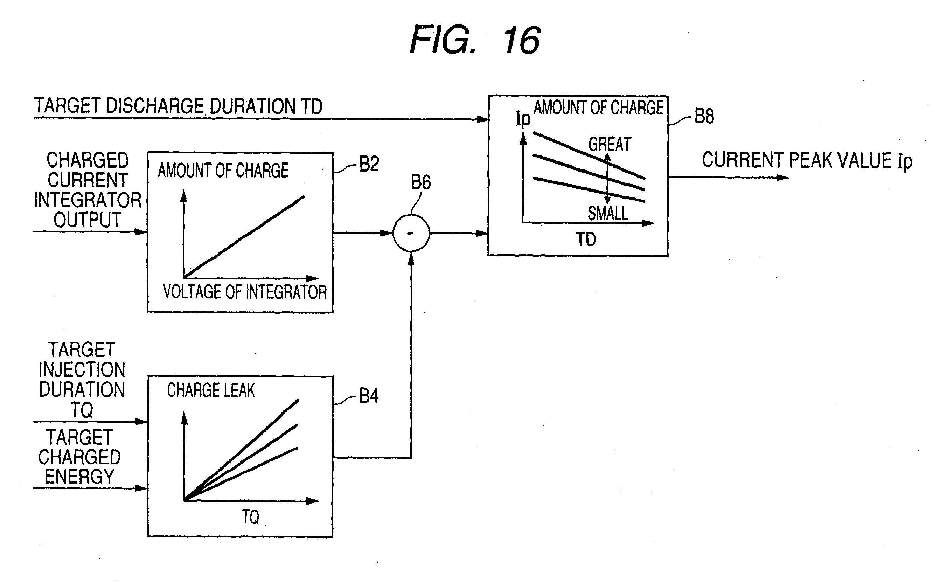

The microcomputer 90 has functional blocks *B2, B4, B6,* and *B8,* as illustrated in Fig. 16, for determining the peak value *Ip.* The block *B2* works as a stored amount of charge calculator to convert the digital signal inputted from the integrator 86 through the A/D converter 88 into the amount of charge stored in the piezoelectric device 41. The value of the digital signal is increased with an increase in amount of charge stored in the piezoelectric device 41.

The block *B4* works as a leakage calculator to calculate the amount of charge leaking from piezoelectric device 41 between the end of the charge operation and the start of the discharge operation as a function of a target injection duration *TQ* for which the piezo injector *PI* is to be opened to inject the fuel into the engine and a target amount of energy to be charged to the piezoelectric device 41. Such an amount of charge leakage usually increases with an increase in time interval between the end of the charge operation and the start of the discharge operation. The target injection duration *TQ* is a parameter which is calculated by the microcomputer 90 when it is required to actuate the piezo injectors *PI* and correlates with the time interval between the end of the charge operation and the start of the discharge operation.

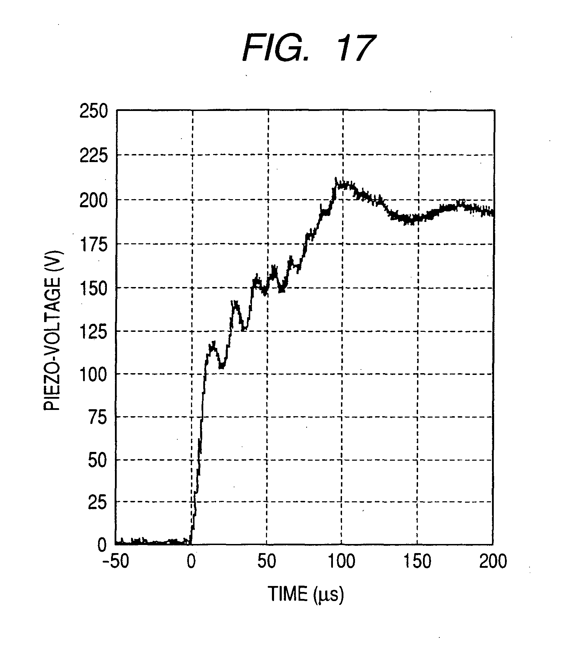

The amount of charge leakage also increases with a rise in voltage developed at the piezoelectric device 41 (will also be referred to as a piezo-voltage below) at the end of the discharge operation. The target amount of energy is a parameter which correlates with the piezo-voltage. Even when the target amount of energy is constant, the piezo-voltage usually changes with a change in capacitance thereof. However, the piezo-voltage usually changes, as illustrated in Fig. 17, greatly, thus resulting in a difficulty in measuring the piezo-voltage accurately (an integral value of the current, as illustrated in Fig. 14(b), may however be calculated easier and more accurately than the piezo-voltage). In contrast, the target amount of energy is a parameter which is calculated as a function of the pressure of fuel within the common rail 5 when it is required to charge the piezoelectric devices 41 and useful in knowing the piezo-voltage easily. The block *B4,* therefore, uses the target amount of energy to determine the rate at which the electric charge leaks from the piezoelectric device 41 between the end of the charge operation and the start of the discharge operation.

The block *B6* works as a subtractor to subtract the amount of charge leakage, as calculated by the block *B4*, from the amount of charge, as calculated by the block *B2*, to determine the amount of charge saved in the piezoelectric device 41 just before the discharge operation.

The block *B8* works as a peak selector to determine the peak value *Ip* based on a target discharge duration *TD* for which the piezoelectric device 41 is to be discharged and the output of the block *B6.* The peak value *Ip* is determined to be smaller as the target discharge duration *TD* is set longer and to be greater as the amount of energy saved at the start of the discharge operation is greater so as to match the value, as derived by integrating the current flowing through the piezoelectric device 41 during the discharge operation, with the amount of charge saved just before the discharge operation. Other arrangements and operations are the same as those in the first embodiment, and explanation thereof in detail will be omitted here.

The common rail fuel injection system of this embodiment offers additional advantages below.

The peak value *Ip* is determined as an additional function of the target injection duration for which the piezo injectors *PI* are to be opened, thus ensuring increased accuracy in controlling the discharge duration for which the piezoelectric devices 41 is to be discharged.

The peak value *Ip* is determined as an additional function of the target amount of energy to be stored in the piezoelectric devices 41 which correlates with the piezo-voltage, thereby increasing the accuracy in determining the discharge duration.

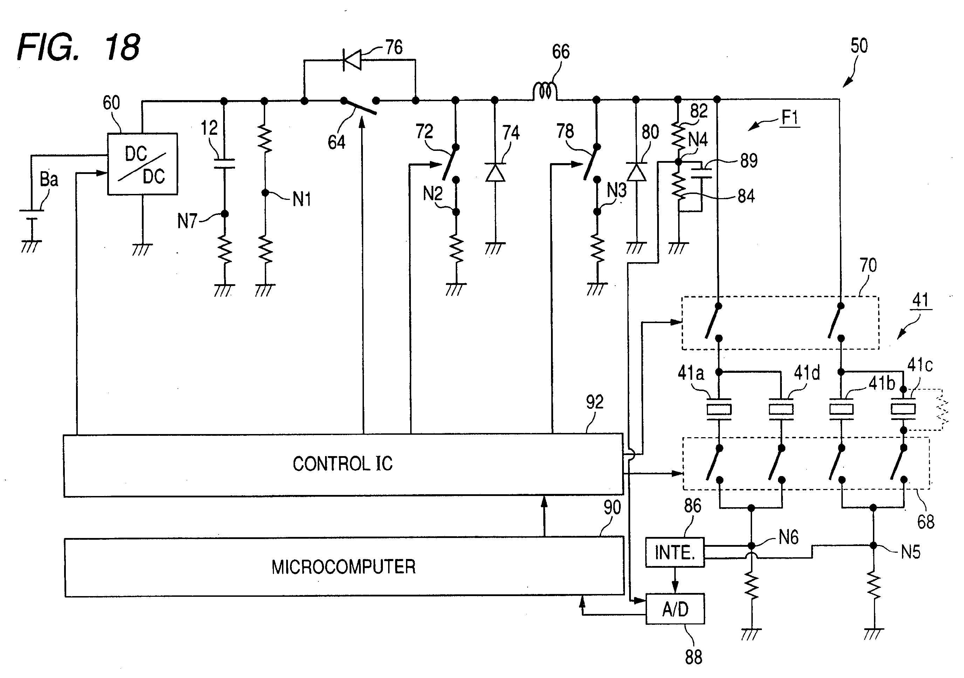

Fig. 18 shows the controller 50 according to the third embodiment of the invention.

The controller 50 is designed to feedback-correct the peak value *Ip,* as determined in the same manner, as described in the second embodiment, using an actual rate of discharging of electric charges or energy from the piezoelectric devices 41.

The controller 50, as clearly shown in Fig. 18, includes a capacitor 89 connected in parallel to the resistor 84. Specifically, the capacitor 89 is connected across the resistor 84 to form a *CR* circuit which is made up of the resistors 82 and 84 and the capacitor 89 and serves as a filter circuit *FI.* The filter circuit *FI* works to smooth the piezo-voltage which is, in turn, sampled by the A/ D converter 88 and converted into the digital form. The microcomputer 90 uses the output of the A/D converter 88 to select the peak value *Ip* in the manner as described below.

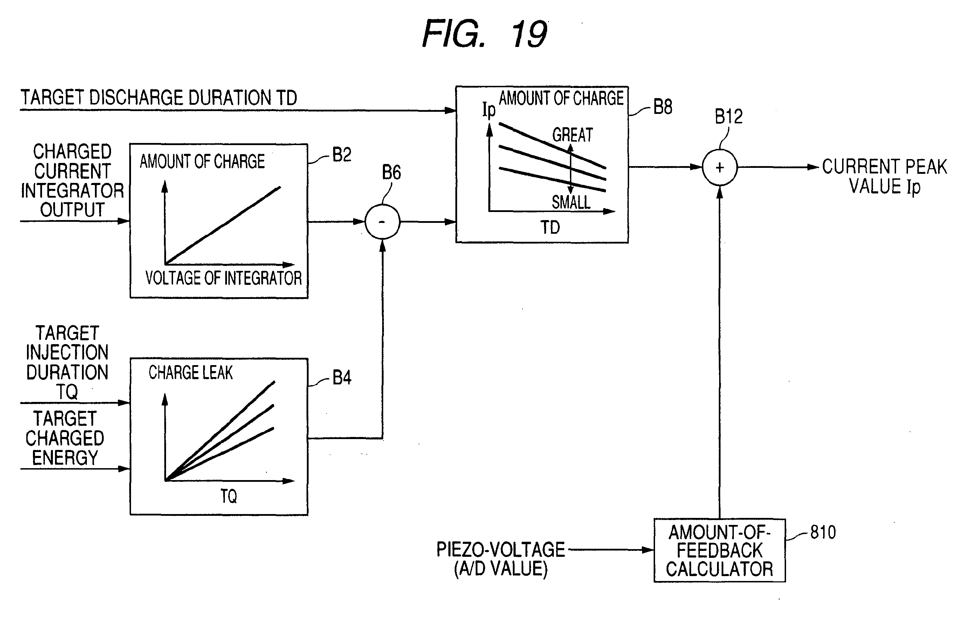

The microcomputer 90 has, as illustrated in Fig. 19, functional blocks *B2, B4, B6, B8, B10,* and *B12.* The blocks *B2, B4, B6,* and *B8* are the same in operation as the ones in Fig. 16, and explanation thereof in detail will be omitted here.

The block *B10* functions as an amount of feedback calculator. The block *B12* functions as an adder. The block *B10* works to sample digital data on the output of the filter circuit *FI* (i.e., the voltage at the node *N4*) and calculate the amount of feedback used to correct the peak value *Ip.* Specifically, the block *B10* samples the voltage at the node *N4* through the filter *IF* to determine the rate of the discharging of energy from the piezoelectric devices 41, calculates a proportion term and an integral term in a *PI* algorithm based on the rate of the discharging and a desired or target rate, and determines the sum of the proportion and integral terms as the amount of correction by which the peak value *Ip* is to be corrected.

The rate of the discharging, as used in this embodiment, is defined by the time consumed between the start of discharging of the piezoelectric devices 41 and when the piezo-voltage reaches a given voltage *Vt* which is preferably 10V to 60V. This is because when the piezo-voltage reaches near zero (0V), it will cause the current to hardly flow through the piezoelectric devices 41, thus resulting in a difficulty in bringing the piezo-voltage to zero (0V) completely. The lower limit of the voltage *Vt* is preferably greater than zero (0V), preferably 10V. Note that the bringing of the piezo-voltage into exact agreement with zero (0V) may be achieved by turning on the short switch 78 after the discharge switch 72 is turned on and off.

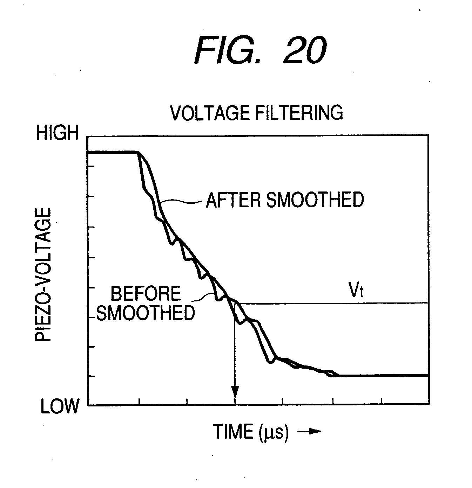

The upper limit of the given voltage *Vt* is preferably set below the piezo-voltage (usually, 60V) when the ball 26 is seated on the valve seat 30. This is because the time of completion of injection of fuel by the piezo injectors *PI* matches the time at which the ball 26 is seated on the valve seat 30, not the time of completion of discharging of the piezoelectric devices 41. Accordingly, the time, as demonstrated in Fig. 20, consumed between the start of discharging of the piezoelectric devices 41 and when the piezo-voltage reaches the given voltage *Vt* which is higher than 0V, preferably 10V and lower than, for example, 60V is used as the rate of discharging from the piezoelectric devices 41.

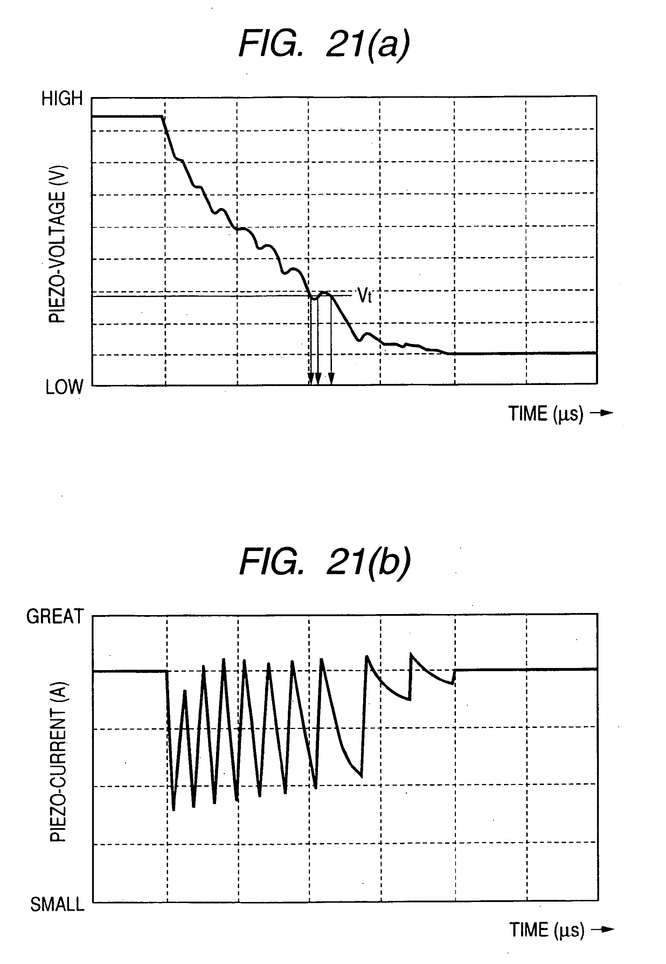

The reason why the piezo-voltage is smoothed using the filter circuit *FI,* as illustrated in Fig. 18, is because the piezo-voltage usually oscillates even during discharging of the piezoelectric devices 41. Therefore, use of the piezo-voltage not smoothed to define the time required by the piezo-voltage to reach the given voltage *Vt* as the rate of discharging may, as can be seen in Figs. 21 (a) and 21(b), result in instability in determining the given voltage *Vt*, as indicated in Fig. 21 (a) by three arrows, for example. In order to avoid this problem, the controller 50 uses the filter circuit *FI* to smooth the piezo-voltage.

The amount of feedback, as calculated by the block *B10* in Fig. 19, is outputted to the block *B12.* The block *B10* works to add the amount of feedback to the output of the block *B8* (i.e., the peak value *Ip*) to determine a target value of the peak value *Ip*.

The common rail fuel injection system of this embodiment offers additional advantages below.

The controller 50 works to measure the piezo-voltage in the discharge mode to calculate the rate of discharging of the piezoelectric devices 41 and feedback-correct the level of the peak value *Ip*, thereby ensuring increased accuracy in controlling the rate of discharging of the piezoelectric devices 41.

The common rail fuel injection system of each of the above embodiments may be modified as discussed below.

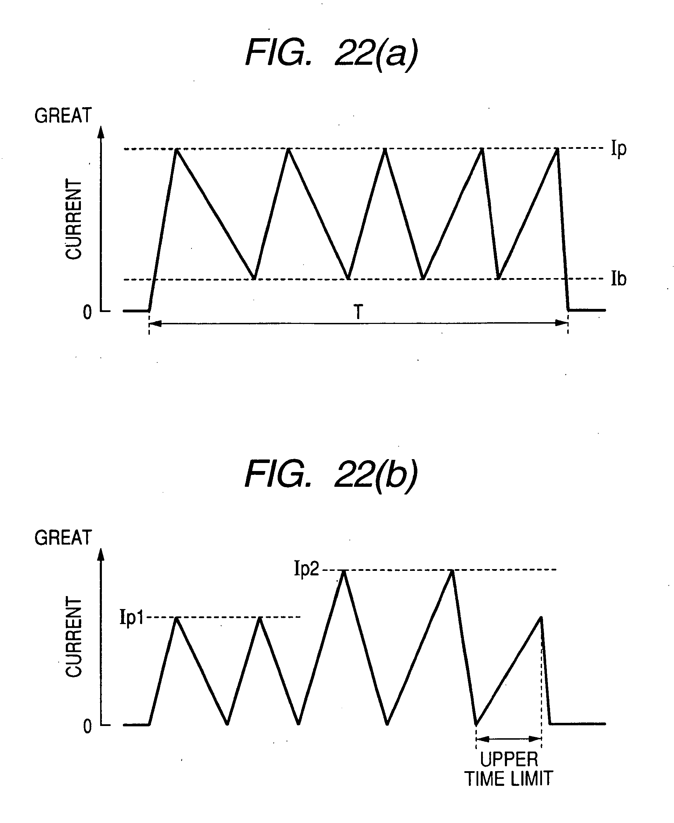

The controller 50 of each of the above embodiments is, as described above, designed to select the peak value *Ip* as a function of the amount of electric charge saved in the piezoelectric devices 41 for bringing the time required to discharge the piezoelectric devices 41 (or the rate of discharging) into agreement with a desired value, but however, may alternatively be designed, as illustrated in Fig. 22(a), to switch the current flowing through the piezoelectric device 41 from increasing to decreasing when the current reaches the peak value *Ip* and from decreasing to increasing when the current reaches the bottom value *Ib* and change the bottom value *Ib* as a function of the amount of charge saved in the piezoelectric devices 41. The amount of the charge to be discharged for the discharge duration *T* may be approximated by *T* × *Ib* + *T* × *-* (*Ip - Ib)* /2. From this equation, it is found that the adjustment of the amount of charge to be released in the desired discharge duration *T* is achieved by selecting the bottom value *Ib.* The controller 50 may also be designed to change both the peak value *Ip* and the bottom value *Ib.*

The controller 50 may also be designed to change either or both of the peak value *Ip* and the bottom value *Ib* during the discharge operation. For instance, the controller 50 may, as demonstrated in Fig. 22(b), select a smaller peak value *Ip1* at an initial stage of the discharge operation and change it to a greater peak value *Ip2* at or after a middle stage of the discharge operation. This is for preventing an absolute value of the rate of change in the piezo-voltage from increasing undesirably at the initial stage of the discharge operation. This is because an excessive rise in the absolute value of the rate of change in the piezo-voltage at the initial stage of the discharge operation may result in increased impact on the body 10 of the piezo injector *PI* upon start of stroke of the piezoelectric device 41 which leads to undesirable mechanical noises. The peak values *Ip1* and *Ip2* are determined as a function of the amount of charge saved in the piezoelectric devices 41.

The controller 50 of each of the second and third embodiments, as described above, uses the target amount of electric energy to be charged to the piezoelectric devices 41 as the parameter correlating with the rate at which the charge leaks from the piezoelectric devices 41 between the end of the charge operation and the start of the discharge operation, but however, may use, as such a parameter, the piezo-voltage smoothed by the filter circuit *FI,* as illustrated in Fig. 18, or the value of the piezo-voltage, as measured immediately before the start of the discharge operation. This is because the oscillation of the pizeo-voltage usually attenuates after the end of the charge operation, thus enabling the piezo-voltage, which will correlate with the piezo-voltage immediately after the end of the charge operation, to be measured easily and accurately before the start of the discharge operation. Further, the piezo-voltage immediately before the discharge operation is a function of the piezo-voltage immediately after the charge operation and the time interval between the end of the charge operation and the start of the discharge operation, thus permitting such a time interval and the piezo-voltage, as measured immediately before the discharge operation, to be used as parameters to know the piezo-voltage appearing immediately after the charge operation to determine the rate at which the electric charge leaks from the piezoelectric devices 41.

The controller 50 of the third embodiment uses the piezo-voltage smoothed by the analog filter circuit *FI,* as illustrated in Fig. 18, to determine the rate of discharging of energy from the piezoelectric devices 41, but however, such smoothing may alternatively achieved by a filter constructed by a CPU and software to filter the digital data on the sampled piezo-voltage through the software.

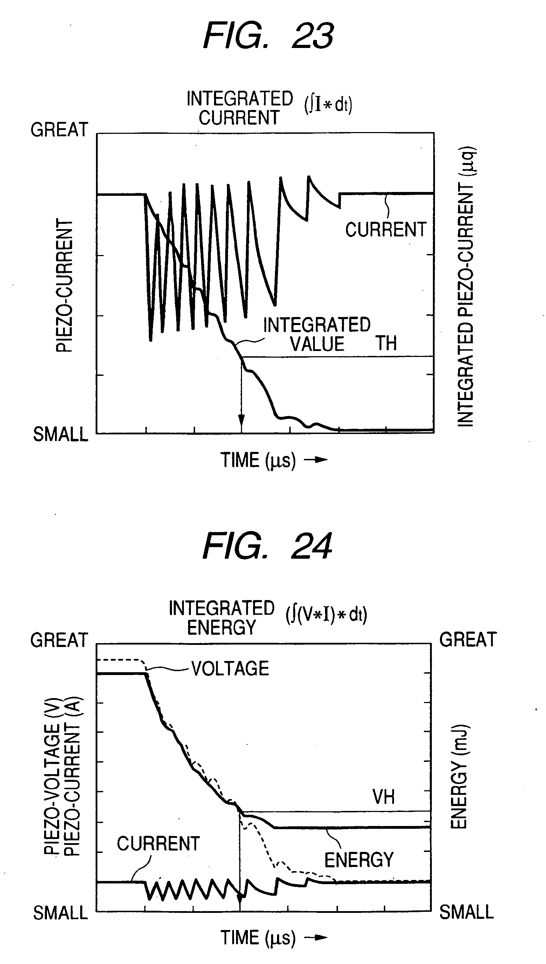

The controller 50 may also be designed to use the time, as illustrated in Fig. 23, required by a time-integrated value of the current flowing through the piezoelectric device 41 to reach a given reference value *TH* during the discharge operation to define the rate of discharging of the piezoelectric devices 41 because the time-integrated value of the current matches the amount of energy discharged from the piezoelectric devices 41. The time-integrated value of the current, as can be seen from Fig. 23, will be an oscillation-minimized electrical quantity of state of the piezoelectric devices 41 when being discharged and is thus useful in defining the rate of discharging of the piezoelectric devices 41.

The controller 50 may also be designed to define the rate of discharging of the piezoelectric devices 41, as illustrated in Fig. 24, based on an integrated value of the piezo-voltage and current flowing through the piezoelectric device 41. Specifically, the time required by a total amount of electric energy discharged from the piezoelectric device 41 to reach a given value *VH* may be used to define the rate of discharging. The total amount of the electric energy, as can be seen from Fig. 24, will be an oscillation-minimized electrical quantity of state of the piezoelectric devices 41 when being discharged and is thus useful in defining the rate of discharging of the piezoelectric devices 41.

The level of the peak value *Ip* is, as described above, selected so that the value derived by integrating the value of the current flowing through the piezoelectric device 41 when being discharged over a desired discharge duration may match up to the amount of electric charge saved in the piezoelectric device 41 immediately before the discharge operation, but however, it may alternatively be determined so that the value derived by integrating the value of the current flowing through the piezoelectric device 41 when being discharged over the time required by the nozzle needle 14 to be seated on the needle seat 16 may correspond to the amount of electric charge saved immediately before the discharge operation. Specifically, the level of the peak value *Ip* may be determined so that the above integrated value may agree with the amount of charge saved immediately before the discharge operation or with the value derived by subtracting the amount of charge remaining in the piezoelectric device 41 when the nozzle needle 14 is seated on the needle seat 16 from the amount of charge saved immediately before the discharge operation.

The piezoelectric devices 41 may be discharged in a manner other than the one illustrated in Fig. 9. For instance, when the piezoelectric devices 41 are charged in the manner, as illustrated in Fig. 11, it is possible to mathematically determine the amount of charge saved in the piezoelectric devices 41 simply using the peak value *Ip* during the charge operation and the charge duration. The peak value *Ip* used in discharging the piezoelectric devices 41 may, therefore, be selected based on the determined amount of charge saved in the piezoelectric devices 41.

The injector drive circuit may be designed to perform the chopper control using the flyback current of a transformer, as taught in, for example, Japanese Patent First Publication No. 8-177678.

The piezo injectors *PI* may have the structure other than the one illustrated in Fig. 2 in which the nozzle needle 14 is moved by the stroke of the piezoelectric device 41 to only two positions: open or closed positions. For instance, each of the piezo injectors *PI* ma have the structure, as taught in U.S.P. No. 6,520,423, in which the amount of stroke of the piezoelectric device 41 may be adjusted to a desired value to hold the nozzle needle 14 in a selected position. However, in the case where when the piezoelectric device 41 starts to be energized, the pressure of fuel acts on a stroke transmission mechanism in the piezo injector *PI* through which the stroke of the piezoelectric device 41 is transmitted in a direction opposite the stroke of the piezoelectric device 41, it is advisable that a target value of the electric quantity of state of the piezoelectric device 41 such as the amount of energy charged to the piezoelectric device 41 and the mode of the chopper control be changed as a function of the pressure of fuel within the common rail 5.

The system, as described in the above embodiments, may be employed with cylinder injection gasoline engines.

A control apparatus for a piezo injector is provided which includes a chopper and a controller. The chopper works to operate in a current increasing mode and a current decreasing mode cyclically to control a stroke of a piezoelectric device. The controller works to operate selectively in a charge mode to charge electrical energy to the piezoelectric device and a discharge mode to discharge the electrical energy from the piezoelectric device. When entering the discharge mode, the controller switches an operation of the chopper from the current increasing mode to the current decreasing mode at the time when the current reaches a given peak value and also switches it from the current decreasing mode to the current increasing mode when the current reaches a given bottom value. The controller determines at least one of the peak value and the bottom value based on a given electrical quantity of state of the piezoelectric device before start of the discharge mode such as the amount of charge saved in the piezoelectric device to discharge the piezoelectric device within a selected period of time.

## Claims

1. A control apparatus for a piezo injector comprising:
a chopper (74, 62, 64, 66; 76, 62, 66, 72) being adapted to operate in a current increasing mode and a current decreasing mode cyclically to control a stroke of a piezoelectric device (41, 41a, 41b, 41c, 41d) which serves as an actuator to actuate a piezo injector (PI), the current increasing mode being to increase a current flowing through the piezoelectric device, the current decreasing mode being to decrease the current flowing through the piezoelectric device; and
a controller (50) being adapted to operate selectively in a charge mode to charge electrical energy to the piezoelectric device and a discharge mode to discharge the electrical energy from the piezoelectric device, when entering the discharge mode, said controller is adapted to switch an operation of said chopper from the current increasing mode to the current decreasing mode at a time when the current reaches a given peak value and also to switch the operation of said chopper from the current decreasing mode to the current increasing mode when the current reaches a given bottom value, thereby discharging the piezoelectric device, said controller is adapted to sample a given electrical quantity of state of the piezoelectric device before start of the discharge mode and to determine at least one of the peak value and the bottom value based on the electrical quantity of state of the piezoelectric device to discharge the energy from the piezoelectric device within a selected period of time in the discharge mode,
wherein
the electrical quantity of state of the piezoelectric device is an amount of charge saved in the piezoelectric device in the charge mode, and
said controller is adapted to sample a value of the current flowing through the piezoelectric device during the charge mode and calculate an integrated value of the sampled value, and said controller is adapted to determine the amount of the charge saved in the piezoelectric device based on the integrated value.

2. A control apparatus as set forth in claim 1, wherein said controller is adapted to sample a voltage developed at the piezoelectric device before start of the discharge mode as the electrical quantity of state of the piezoelectric device, and to set a difference between the peak value and the bottom value as a function of the sampled voltage to define the peak value and the bottom value used in the discharge mode.

3. A control apparatus as set forth in claim 1, wherein said controller is also adapted to determine a time interval between an end of the charge mode and a start of the discharge mode and use the determined time interval in determining the amount of the charge saved in the piezoelectric device.

4. A control apparatus as set forth in claim 1, wherein said controller is adapted to determine a discharge rate that is a rate at which the energy is discharged from the piezoelectric device based on a given electrical quantity of state of the piezoelectric device during the discharge mode, and to correct the at least one of the peak value and the bottom value based on the discharge rate.

5. A control apparatus as set forth in claim 1, further comprising:
a smoothing circuit (FI) being adapted to smooth a voltage, as developed at the piezoelectric device, and output a signal indicative thereof, wherein
said controller is also adapted to determine a discharge rate that is a rate at which the energy is discharged from the piezoelectric device based on the output from said smoothing circuit to correct the at least one of the peak value and the bottom value based on the discharge rate for discharging the energy from the piezoelectric device within a selected period of time in the discharge mode.

6. A control apparatus as set forth in any one of claims 1 to 5, wherein the piezo injector is constructed to be supplied with fuel from an accumulator in which the fuel is stored at a given pressure, and wherein said controller is adapted to modify the charge mode based on a pressure of the fuel in the accumulator.

7. A control apparatus as set forth in claim 6, wherein said controller is adapted to increase the amount of the energy charged to the piezoelectric device with an increase in the pressure of the fuel in the accumulator.

## Patentansprüche

1. Steuergerät für eine Piezo-Einspritz-Vorrichtung, mit:
einem Gleichstromsteller (74, 62, 64, 66; 76, 62, 66, 72), der dazu eingerichtet ist, um zyklisch in einem Stromsteigerungsmodus und einem Stromsenkungsmodus zu arbeiten, um einen Hub einer piezoelektrischen Einrichtung (41, 41a, 41b, 41c, 41d) zu steuern, die als ein Aktuator dient, um eine Piezo-Einspritz-Vorrichtung (PI) anzutreiben, wobei der Stromsteigerungsmodus dazu dient, einen durch die piezoelektrische Einrichtung fließenden Strom zu steigern, wobei der Stromsenkungsmodus dazu dient, den durch die piezoelektrische Einrichtung fließenden Strom zu senken; und
einer Steuervorrichtung (50), die dazu eingerichtet ist, um ausgewählt in einem Lademodus zu arbeiten, um elektrische Energie in die piezoelektrische Einrichtung zu laden und in einem Entlademodus zu arbeiten, um die elektrische Energie aus der piezoelektrischen Einrichtung zu entladen, wobei bei Eintritt in den Entlademodus die Steuervorrichtung dazu eingerichtet ist, um einen Betrieb des Gleichstromstellers von dem Stromsteigerungsmodus in den Stromsenkungsmodus zu einer Zeit umzuschalten, wenn der Strom einen gegebenen Maximalwert erreicht, und auch um den Betrieb des Gleichstromstellers von dem Stromsenkungsmodus in den Stromsteigerungsmodus umzuschalten, wenn der Strom einen gegebenen Minimalwert erreicht, wobei **dadurch** die piezoelektrische Einrichtung entladen wird, wobei die Steuervorrichtung dazu eingerichtet ist, um eine gegebene elektrische Zustandsgröße der piezoelektrischen Einrichtung vor dem Start des Entlademodus abzutasten und um zumindest einen von dem Maximalwert und dem Minimalwert basierend auf der elektrischen Zustandsgröße der piezoelektrischen Einrichtung zu bestimmen, um die Energie aus der piezoelektrischen Einrichtung innerhalb einer ausgewählten Zeitdauer in dem Entlademodus zu entladen,
wobei
die elektrische Zustandsgröße der piezoelektrischen Einrichtung eine Menge von in der piezoelektrischen Einrichtung in dem Lademodus gespeicherten Ladung ist, und
die Steuervorrichtung dazu eingerichtet ist, um einen Wert des während des Lademodus durch die piezoelektrische Einrichtung fließenden Stroms abzutasten und einen integrierten Wert des abgetasteten Werts zu berechnen, und wobei die Steuervorrichtung dazu eingerichtet ist, um die Menge der in der piezoelektrischen Einrichtung gespeicherten Ladung basierend auf dem integrierten Wert zu bestimmen.

2. Steuergerät nach Anspruch 1, wobei die Steuervorrichtung dazu eingerichtet ist, um eine an der piezoelektrischen Einrichtung gebildete Spannung vor Start des Entlademodus als die elektrische Zustandsgröße der piezoelektrischen Einrichtung abzutasten, und um eine Differenz zwischen dem Maximalwert und dem Minimalwert als eine Funktion der abgetasteten Spannung einzustellen, um den in dem Entlademodus genutzten Maximalwert und den Minimalwert zu definieren.

3. Steuergerät nach Anspruch 1, wobei die Steuervorrichtung auch dazu eingerichtet ist, um ein Zeitintervall zwischen einem Ende des Lademodus und einem Start des Entlademodus zu bestimmen, und um das bestimmte Zeitintervall bei Bestimmung der Menge der in der piezoelektrischen Einrichtung gespeicherten Ladung zu nutzen.

4. Steuergerät nach Anspruch 1, wobei die Steuervorrichtung dazu eingerichtet ist, um eine Entladerate zu bestimmen, die eine Rate ist, bei der die Energie aus der piezoelektrischen Einrichtung basierend auf einer gegebenen elektrischen Zustandsgröße der piezoelektrischen Einrichtung während des Entladungsmodus entladen wird, und um den zumindest einen aus dem Maximalwert und dem Minimalwert basierend auf der Entladerate zu korrigieren.

5. Steuergerät nach Anspruch 1, ferner mit:
einem Glättschaltkreis (FI), der dazu eingerichtet ist, um eine Spannung, wie an der piezoelektrischen Einrichtung gebildet, zu glätten, und um ein dies anzeigendes Signal auszugeben, wobei
die Steuervorrichtung auch dazu eingerichtet ist, um eine Entladerate zu bestimmen, die eine Rate ist, bei der die Energie aus der piezoelektrischen Einrichtung basierend auf der Ausgabe des Glättschaltkreises entladen wird, um den zumindest einen aus dem Maximalwert und dem Minimalwert basierend auf der Entladerate zur Entladung der Energie aus der piezoelektrischen Einrichtung innerhalb einer ausgewählten Zeitdauer in dem Entlademodus zu korrigieren.

6. Steuergerät nach einem der Ansprüche 1 bis 5, wobei die Piezo-Einspritz-Vorrichtung konstruiert ist, um mit Kraftstoff von einem Akkumulator, in dem der Kraftstoff bei einem gegebenen Druck gelagert ist, versorgt zu werden, und wobei die Steuervorrichtung dazu eingerichtet ist, um den Lademodus basierend auf einem Druck des Kraftstoffs in dem Akkumulator zu verändern.

7. Steuergerät nach Anspruch 6, wobei die Steuervorrichtung dazu eingerichtet ist, um die Menge der in die piezoelektrische Einrichtung geladenen Energie mit einem Steigen des Drucks des Kraftstoffs in dem Akkumulator zu steigern.

## Revendications

1. Appareil de commande pour un injecteur piézoélectrique comprenant :
un hacheur (74, 62, 64, 66 ; 76, 62, 66, 72) conçu pour fonctionner dans un mode d'augmentation de courant et un mode de diminution de courant cycliquement pour commander une course d'un dispositif piézoélectrique (41, 41a, 41 b, 41c, 41 d) qui sert en tant qu'actionneur pour actionner un injecteur piézoélectrique (PI), le mode d'augmentation de courant servant à augmenter un courant circulant à travers le dispositif piézoélectrique, le mode de diminution de courant servant à diminuer le courant circulant à travers le dispositif piézoélectrique ; et
un contrôleur (50) conçu pour fonctionner de manière sélective dans un mode de charge pour charger une énergie électrique dans le dispositif piézoélectrique et un mode de décharge pour décharger l'énergie électrique du dispositif piézoélectrique, lors de l'entrée dans le mode de décharge, ledit contrôleur est conçu pour commuter un fonctionnement dudit hacheur du mode d'augmentation de courant dans le mode de diminution de courant à un instant auquel le courant atteint une valeur crête donnée et également pour commuter le fonctionnement dudit hacheur du mode de diminution de courant dans le mode d'augmentation de courant lorsque le courant atteint une valeur inférieure donnée, déchargeant de ce fait le dispositif piézoélectrique, ledit contrôleur est conçu pour échantillonner une quantité d'état électrique donnée du dispositif piézoélectrique avant le début du mode de décharge et pour déterminer au moins l'une de la valeur crête et de la valeur inférieure sur la base de la quantité d'état électrique du dispositif piézoélectrique pour décharger l'énergie du dispositif piézoélectrique dans une période de temps sélectionnée dans le mode de décharge,
dans lequel
la quantité d'état électrique du dispositif piézoélectrique est une quantité de charge accumulée dans le dispositif piézoélectrique dans le mode de charge, et
ledit contrôleur est conçu pour échantillonner une valeur du courant circulant à travers le dispositif piézoélectrique dans le mode de charge et calculer une valeur intégrée de la valeur échantillonnée, et ledit contrôleur est conçu pour déterminer la quantité de charge accumulée dans le dispositif piézoélectrique sur la base de la valeur intégrée.

2. Appareil de commande selon la revendication 1, dans lequel ledit contrôleur est conçu pour échantillonner une tension développée au niveau du dispositif piézoélectrique avant le début du mode de décharge en tant que quantité d'état électrique du dispositif piézoélectrique, et pour fixer une différence entre la valeur crête et la valeur inférieure en fonction de la tension échantillonnée pour définir la valeur crête et la valeur inférieure utilisées dans le mode de décharge.

3. Appareil de commande selon la revendication 1, dans lequel ledit contrôleur est également conçu pour déterminer un intervalle de temps entre une fin du mode de charge et un début du mode de décharge et utiliser l'intervalle de temps déterminé en déterminant la quantité de charge accumulée dans le dispositif piézoélectrique.

4. Appareil de commande selon la revendication 1, dans lequel ledit contrôleur est conçu pour déterminer une vitesse de décharge qui est une vitesse à laquelle l'énergie est déchargée du dispositif piézoélectrique sur la base d'une quantité d'état électrique donnée du dispositif piézoélectrique dans le mode de décharge, et pour corriger ladite au moins une de la valeur crête et de la valeur inférieure sur la base de la vitesse de décharge.

5. Appareil de commande selon la revendication 1, comprenant en outre :
un circuit de lissage (FI) conçu pour lisser une tension, telle que développée au niveau du dispositif piézoélectrique, et délivrer un signal indicatif de celle-ci, dans lequel
ledit contrôleur est également conçu pour déterminer une vitesse de décharge qui est une vitesse à laquelle l'énergie est déchargée du dispositif piézoélectrique sur la base de la sortie dudit circuit de lissage pour corriger ladite au moins une de la valeur crête et de la valeur inférieure sur la base de la vitesse de décharge pour décharger l'énergie du dispositif piézoélectrique dans une période de temps sélectionnée dans le mode de décharge.

6. Appareil de commande selon l'une quelconque des revendications 1 à 5, dans lequel l'injecteur piézoélectrique est construit pour être alimenté en carburant à partir d'un accumulateur dans lequel le carburant est stocké à une pression donnée, et dans lequel ledit contrôleur est conçu pour modifier le mode de charge sur la base d'une pression du carburant dans l'accumulateur.

7. Appareil de commande selon la revendication 6, dans lequel ledit contrôleur est conçu pour augmenter la quantité d'énergie chargée dans le dispositif piézoélectrique avec une augmentation de la pression du carburant dans l'accumulateur.
